# EUROPÄISCHE PATENTSCHRIFT

(11) **EP 2 345 527 B1**
(45) Veröffentlichungstag und Bekanntmachung des Hinweises auf die Patenterteilung: **09.04.2014**
(21) Anmeldenummer: 11000166.6
(22) Anmeldetag: 11.01.2011
(51) Int. Cl.: B65B 7/16, B29C 65/18, B30B 1/38, B65B 51/14, B65D 77/20, F16J 9/00

(54) **Siegelwerkzeug**
Sealing tool
Outil de scellage

(30) Priorität: 14.01.2010 DE 102010004635
(43) Veröffentlichungstag der Anmeldung: 20.07.2011
(73) Patentinhaber: MULTIVAC Sepp Haggenmüller GmbH & Co KG, 87787 Wolfertschwenden (DE)
(72) Erfinder: Holzem, Dieter, 88453 Erolzheim (DE); Zeller, Hubert, 87724 Ottobeuren (DE)
(74) Vertreter: Grünecker, Kinkeldey, Stockmair & Schwanhäusser

(56) Entgegenhaltungen:
- EP-A2- 2 112 070
- DE-A1- 3 404 451
- DE-A1- 19 935 623
- US-A- 4 282 699

## Beschreibung

Die vorliegende Erfindung bezieht sich auf ein Siegelwerkzeug für eine Verpackungsmaschine gemäß dem Oberbegriff des Anspruchs 1.

In der EP 2 112 070 A2 ist ein Siegelwerkzeug in einer Siegelvorrichtung offenbart, bei der eine Dichtung in einem Werkzeuginnenteil aufgenommen ist und gegen ein Werkzeugaußenteil abdichtet, während sich das Werkzeuginnenteil relativ zum Werkzeugaußenteil bewegen kann. Dabei wirkt ein Druck auf das Werkzeuginnenteil, um eine Siegelkraft des Werkzeuginnenteils auf die zu siegelnde Verpackung zu erzeugen.

Die US 4,282,699 offenbart eine Siegeleinrichtung mit einem Pneumatikzylinder als Antrieb und Krafterzeugung des Siegelwerkzeuginnenteils. Eine Dichtung, die an dem Siegelwerkzeuginnenteil und an einem Siegelwerkzeugaußenteil befestigt ist, dient zur Abtrennung vom Antrieb und der zu siegelnden Packung zum Erzeugen einer sterilen Umgebung.

Mit Siegelwerkzeugen werden beispielsweise in Tiefziehverpackungsmaschinen oder Schalenverschließmaschinen (ʺ̋Traysealer") Verpackungen luftdicht verschlossen und versiegelt. Um die Haltbarkeit der verpackten Produkte zu verlängern, kann die Verpackung ggf. unter modifizierter Atmosphäre verschlossen werden, bei der die Luft in der Verpackung evakuiert oder zumindest teilweise durch ein Austauschgas ersetzt wird.

Als Siegelwerkzeuginnenteil ist in den meisten Fällen eine Siegelplatte vorgesehen, die mit einer Heizplatte oder einer anderen Heizeinrichtung in Verbindung steht, um auf die gewünschte Siegeltemperatur erwärmt zu werden. Die Siegelplatte, d. h. das Siegelwerkzeuginnenteil, ist in vertikaler Richtung beweglich, um auf die Verpackung abgesenkt und an die Verpackung angepresst zu werden. Sofern Druckluft unter einem genügend hohem Druck zur Verfügung steht, beispielsweise mit mindestens 6 bar, erfolgt der Antrieb der Siegelplatte über Pneumatikzylinder oder aufblasbare Schläuche, die auf der Oberseite der Siegelplatte liegen und mit Druckluft gefüllt werden.

Wenn jedoch keine Druckluftversorgung oder eine Druckluftversorgung mit einem maximalen Überdruck von nur 1 bar gegenüber Normaldruck zur Verfügung steht, beispielsweise aus einer Vakuumpumpe im Verdichterbetrieb, kann mit einem solchen Antrieb kein ausreichender Siegeldruck mehr erzielt werden. Selbst wenn die Siegelkammer evakuiert wird, beträgt der maximale Druckunterschied in diesem Fall nur 2 bar.

Für solche Fälle einer Druckluftversorgung mit zu geringem Druck bietet es sich gemäß der Formel "Kraft = Druck x Fläche" zum Erzielen genügend hoher Siegelkräfte an, die vom Druck beaufschlagte Fläche zu vergrößern. Zu diesem Zweck kann entweder die gesamte Oberfläche der Siegelplatte mit Druck beaufschlagt werden, oder die Siegelplatte ist starr mit einer außerhalb der eigentlichen Siegelkammer angeordneten Kolbenplatte verbunden. In diesem Fall wirkt der Druck auf die Kolbenplatte, und die Kolbenplatte kann als das bewegliche Siegelwerkzeuginnenteil betrachtet werden, deren Bewegung auf die eigentliche Siegelplatte übertragen wird.

Wenn die Oberseite der gesamten Siegelplatte oder einer Kolbenplatte mit Druck beaufschlagt und dadurch bewegt werden soll, ist während der gesamten Bewegung eine ausreichende Abdichtung erforderlich. Bekannt ist es dafür, eine flexible O-Ring-Dichtung in den Spalt zwischen dem Siegelwerkzeugaußenteil und dem beweglichen Siegelwerkzeuginnenteil einzusetzen. Alternativ dazu kann (bis auf ggf. kleine Aussparungen zur Leitungsdurchführung) eine Membran vorgesehen werden, deren Fläche größer ist als die Oberfläche der Siegelplatte bzw. der Kolbenplatte, und die außerhalb des Siegelwerkzeuginnenteils ringsum im Sigelwerkzeugaußenteil eingespannt ist. Wenn diese großflächige Membran von oben mit Druck beaufschlagt wird, legt sie sich an die Siegelplatte bzw. Kolbenplatte an und drückt diese nach unten.

Eine solche Membran leidet jedoch unter dem Nachteil, dass sie stark beansprucht wird und häufig ausgetauscht werden muss, was zum Stillstand des Siegelwerkzeugs und damit im ungünstigsten Fall auch der gesamten Verpackungsmaschine führt.

Die Aufgabe der vorliegenden Erfindung ist es, ein Siegelwerkzeug zur Verfügung zu stellen, das möglichst wartungsarm ist und auch bei sehr geringen Druckunterschieden noch eine ausreichende Siegelfläche mit einem Siegeldruck von beispielsweise 150 N/cm² erreicht.

Diese Aufgabe wird gelöst durch ein Siegelwerkzeug mit den Merkmalen des Anspruchs 1. Vorteilhafte Weiterbildungen der Erfindung sind in den Unteransprüchen angegeben.

Die Erfindung sieht vor, dass die Dichtung zwischen dem Siegelwerkzeugaußenteil und dem Siegelwerkzeuginnenteil flächig und ringförmig ausgebildet und sowohl in einem ersten Haltebereich am Siegelwerkzeugaußenteil, als auch in einem zweiten Haltebereich am Siegelwerkzeuginnenteil befestigt ist. Zudem ist der zweite Haltebereich am Siegelwerkzeuginnenteil an oder nahe der Außenkante des Siegelwerkzeuginnenteils angeordnet. Durch diese Merkmale bietet das erfindungsgemäße Siegelwerkzeug verschiedene Vorteile:
- Im Vergleich zu einer die gesamte Oberfläche des Siegelwerkzeuginnenteils überspannenden Dichtung reduziert sich der Materialbedarf für eine lediglich ringförmige Dichtung.
- Ebenfalls im Vergleich zu einer das gesamte Siegelwerkzeuginnenteil überspannenden Membran-Dichtung erhöht sich der Wirkungsgrad, da der Druck unmittelbar auf die Oberfläche des Siegelwerkzeuginnenteils wirken kann, ohne zunächst die Membran an das Siegelwerkzeuginnenteil andrücken zu müssen.
- Nahezu die gesamte Oberfläche des Siegelwerkzeuginnenteils steht für eine Verbindung mit Leitungen, Heiz- oder Kühlkanälen zur Verfügung. Eine starke Materialbeanspruchung der Dichtung bzw. Membran im Bereich der Durchführungen dieser Leitungen oder Kanäle wird vermieden, da die Befestigung der Dichtung weit entfernt von diesen Leitungen oder Kanälen erfolgt, nämlich an oder nahe der Außenkante des Siegelwerkzeuginnenteils.

Wenn die Dichtung eine zum Verlauf der Außenkontur des Siegelwerkzeuginnenteils kongruente Form aufweist, verteilen sich die auf die Dichtung wirkenden Kräfte besonders gleichmäßig, sodass die Wartungs- oder Betriebsintervalle der Dichtung deutlich verlängert werden.

Günstig ist es, wenn die Dichtung ausgehend von einem entspannten Zustand dehnbar ist, da sie sich auf diese Weise besonders gut an die Bewegung des Siegelwerkzeuginnenteils anpassen und stets eine ausreichende Abdichtung gewährleisten kann.

Vorzugsweise weist die Dichtung Silikon auf, oder sie besteht insgesamt aus Silikon.

Zweckmäßig ist es, wenn die Dichtung eine konstante Breite aufweist. Auch dies unterstützt eine gleichmäßige Verteilung der auf die Dichtung wirkenden Kräfte, so dass Stellen zu starker Beanspruchung vermieden werden.

Zwischen dem Siegelwerkzeugaußenteil und dem Siegelwerkzeuginnenteil liegt vein Spalt mit einer bestimmten Spaltbreite vor, und der erste und der zweite Haltebereich für die Dichtung sind in einer Projektion auf eine Ebene senkrecht zur Bewegungsrichtung des Siegelwerkzeuginnenteils weiter voneinander entfernt als die Spaltbreite. Bei gleicher Bewegungsamplitude des Siegelwerkzeuginnenteils verringert sich so der Winkel, unter dem die Dichtung in den beiden Endstellungen des Siegelwerkzeuginnenteils steht, und verringern sich die Zugspannungen in der Dichtung. Auf diese Weise wird abermals die Lebensdauer einer Dichtung erhöht.

Denkbar ist es, dass zwischen dem Siegelwerkzeugaußenteil und dem Siegelwerkzeuginnenteil ein Spalt vorliegt, und dass der erste Haltebereich gegenüber der Außenkante des Spalts nach Außen versetzt ist. Zusätzlich oder alternativ könnte der zweite Haltebereich gegenüber der Innenkante des Spalts auf dem Siegelwerkzeuginnenteil nach Innen versetzt sein. Beides führt dazu, dass die Breite der Dichtung deutlich größer ist als die Breite des Spalts, so dass sich die Zugkräfte auf die Dichtung verringern.

Eine Abschrägung oder Abstufung ist zumindest zwischen einem der beiden Haltebereiche und dem Spalt vorgesehen. Sie sorgt dafür, dass die Dichtung bei der Bewegung des Siegelwerkzeuginnenteils nicht unmittelbar am Spalt, sondern an einer vom Spalt beabstandeten Stelle ausgelenkt wird, um eine zu starke Beanspruchung der Dichtung zu verhindern.

Besonders günstig ist es, wenn sich in einer Endstellung des Siegelwerkzeuginnenteils eine Oberfläche des Siegelwerkzeuginnenteils jenseits des Spalts stetig fortsetzt mit der Oberfläche der Abschrägung oder Abstufung. Dies bietet den Vorteil, dass sich die Dichtung an die beiden Oberflächen diesseits und jenseits des Spalts anlegen und den Spalt stetig, d. h. ohne einen Knick, überqueren kann. Damit wird eine übermäßige Beanspruchung und eine sich daraus ergebenden Schwächung der Dichtung am Spalt verhindert.

Zusätzlich oder alternativ wäre es denkbar, dass die Dichtung in jeder Stellung während der Bewegung des Siegelwerkzeuginnenteils von der Abschrägung oder Abstufung beabstandet bleibt, um auch auf diese Weise stetig und ohne einen Knick den Spalt überqueren zu können.

Zwischen zumindest einem der beiden Haltebereiche und dem Spalt kann eine Kante mit einer Abrundung vorgesehen sein, über die sich die Dichtung bei der Bewegung des Siegelwerkzeuginnenteils legen kann. Dadurch wird die Bildung eines Knicks in der Dichtung verhindert.

Denkbar wäre auch eine Ausführungsform, bei der mehrere miteinander verbundene Kolbenplatten, die in Reihe geschaltet bzw. angeordnet sind, gemeinsam als Antrieb für eine Siegelplatte verwendet werden. Der Siegeldruck multipliziert sich annähernd mit der Zahl der Kolbenplatten.

Schließlich bezieht sich die Erfindung nicht nur auf ein Siegelwerkzeug allein, sondern auch auf eine Verpackungsmaschine mit einem solchen Siegelwerkzeug.

Im Folgenden wird ein vorteilhaftes Ausführungsbeispiel der Erfindung anhand einer Zeichnung näher erläutert. Im Einzelnen zeigen:
- Figur 1: einen schematischen Vertikalschnitt durch ein erfindungsgemäßer Siegelwerkzeug,
- Figur 2: einen Vertikalschnitt durch das in Figur 1 gezeigte, nun aber geschlossene Siegelwerkzeug,
- Figur 3: einen Vertikalschnitt durch eine mit einer Kolbenplatte verbundene Siegelplatte in einer angehobenen Stellung,
- Figur 4: eine Draufsicht auf die in Figur 3 gezeigte Kolbenplatte und Dichtung, und
- Figur 5: einen Vertikalschnitt durch die Siegelplatte und die Kolbenplatte gemäß Figur 3 in einer abgesenkten Stellung der Siegelplatte.

Gleiche Komponenten sind in den Figuren durchgängig mit gleichen Bezugszeichen versehen.

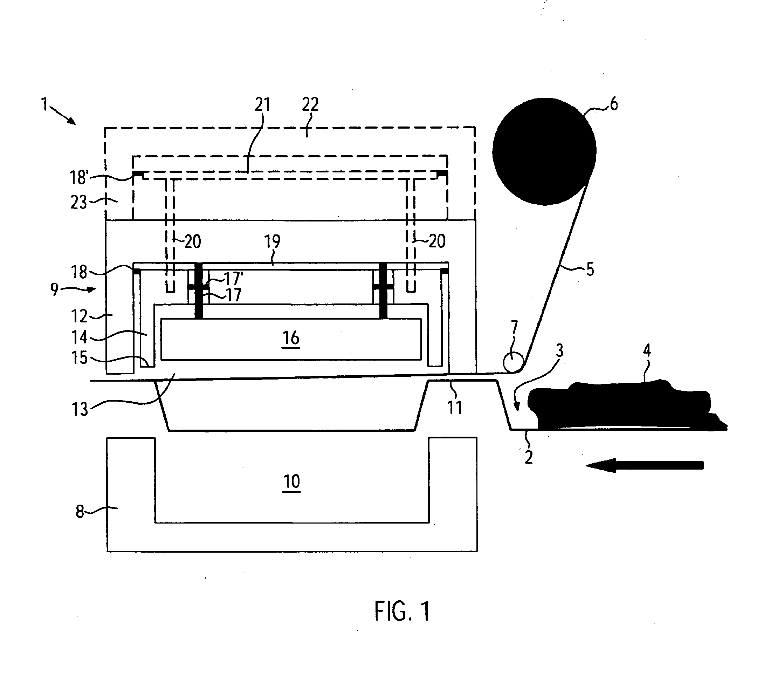

Figur 1 zeigt einen Vertikalschnitt durch ein Ausführungsbeispiel eines erfindungsgemäßen Siegelwerkzeugs 1 in einer geöffneten Stellung. Im vorliegenden Ausführungsbeispiel ist dieses Siegelwerkzeug 1 integriert in eine Tiefzieh-Verpackungsmaschine. In der Verpackungsmaschine werden in einer Unterfolie 2 durch Tiefziehen Mulden 3 geformt, die dann mit einem Produkt 4 befüllt werden. Im Siegelwerkzeug sollen die Mulden 2 mit einer auf ihren Rand aufgelegten Deckelfolie 5 verschlossen werden, um versiegelte Verpackungen zu bilden. Die Deckelfolie 5 wird von einer Rolle 6 abgezogen und über Umlenkrollen 7 dem Siegelwerkzeug 1 zugeführt.

Das Siegelwerkzeug 1 verfügt über ein Unterteil 8 und ein Oberteil 9. Das Unterteil 8 des Siegelwerkzeugs 1 verfügt über eine Aufnahme 10, die groß genug ist zur Aufnahme einer Mulde 2. Die Ränder 11 der Verpackungsmulde 2 können dabei auf den Rändern des Siegelwerkzeug-Unterteils 8 aufliegen. Das Oberteil 9 des Siegelwerkzeugs verfügt über ein Siegelwerkzugaußenteil 12, das gemeinsam mit dem Siegelwerkzeug-Unterteil 8 eine Sigelkammer 13 öffnen und schließen kann. Relativ zum Siegelwerkzeugaußenteil 12 ist in dessen Inneren ein Siegelwerkzeuginnenteil 14 vorgesehen. Am umlaufenden unteren Rand des Siegelwerkzeuginnenteils 14 befindet sich der eigentliche Siegelrand 15. Wird dieser Siegelrand 15 auf die Verpackung abgesenkt und an die Verpackung angepresst, erfolgt entlang der Kontur des Siegelrandes 15 eine Versiegelung der Deckelfolie 5 mit der Unterfolie 2.

Im Inneren des Siegelwerkzeuginnenteils 14 befindet sich eine Kühl- oder Produktschutzplatte 16. Über Kühlleitungen 17 wird sie von einem Kühlmedium durchströmt, so dass sie kühler ist als die erwärmte Siegelplatte 14. Auf diese Weise können empfindliche Produkte 4 während des Siegelns vor der Wärme der Siegelplatte 14 geschützt werden. Die Kühlleitungen 17 sind über Dichtungen 17' gegen die Siegelplatte 14 abgedichtet. An Stelle der Kühlleitungen 17 können auch Wärme ableitende Bolzen vorgesehen sein.

Im ersten Ausführungsbeispiel ist die Siegelplatte bzw. das Siegelwerkzeuginnenteil 14 vertikal innerhalb des Siegelwerkzeugaußenteils 12 beweglich. Eine Dichtung 18 verläuft ringförmig zwischen der Oberseite der Siegelplatte 14 und dem Siegelwerkzeugaußenteil 12. Diese Dichtung ist als flächiges, ringförmiges Teil aus Silikon hergestellt. Ihre Außenkante ist am Siegelwerkzeugaußenteil 12 befestigt, während ihre Innenkante am Siegelwerkzeuginnenteil 14 befestigt ist. Der Raum 19 oberhalb des Siegelwerkzeuginnenteils 14, d. h. zwischen dem Siegelwerkzeugaußenteil 12 und dem Siegelwerkzeuginnenteil 14, kann mit Druckluft beaufschlagt werden. Diese Druckluft wirkt auf das Siegelwerkzeuginnenteil 14 und bewegt dieses relativ zum Siegelwerkzeugaußenteil 12 nach unten.

Ein zweites, alternatives Ausführungsbeispiel des Siegelwerkzeugs 1 ist ebenfalls in Figur 1 angedeutet. In diesen alternativen Ausführungsbeispiel fehlt die Dichtung 18 zwischen der Siegelplatte 14 und dem Siegelwerkzeugaußenteil 12. Stattdessen ist die Siegelplatte 14 über eine starre Verbindung (beispielsweise über Bolzen) 20 mit einer Kolbeneinrichtung oder Kolbenplatte 21 verbunden, die in einem oberhalb der Siegelkammer 13 zusätzlich vorgesehenen Kolbenkammer 22 beweglich gelagert ist. Die Wände 23 dieser zusätzlichen Kolbenkammer 22 bilden nun das Siegelwerkzeugaußenteil 12, während die Kolbenplatte 21 das bewegliche Siegelwerkzeuginnenteil bildet.

Die Dichtung 18' ist in diesem zweiten Ausführungsbeispiel zwischen den Außenwänden 23 der Kolbenkammer 22 und der Kolbenplatte 21 vorgesehen. Diese Dichtung 18', die ebenfalls als flacher Silikon-Ring ausgebildet sein kann, ist an ihrer Außenseite an den Wänden 23 der Kolbenkammer 22 befestigt, während ihre Innenkante an oder nahe der Außenkante der Kolbenplatte 21 befestigt ist. Der Bereich der Kolbenkammer 22 oberhalb der Kolbenplatte 21 kann mit Druckluft beaufschlagt werden, um die Kolbenplatte nach unten zu drücken. Wegen der Verbindung 20 folgt die Siegelplatte 14 dieser Bewegung der Kolbenplatte 21, um gegen den zu verschließenden Behälter angedrückt zu werden.

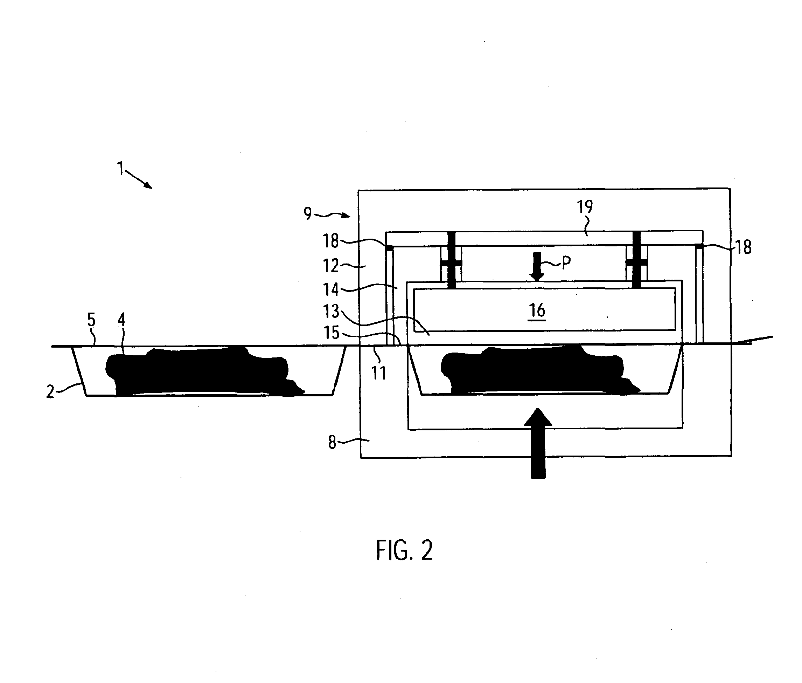

Figur 2 zeigt das Siegelwerkzeug 1 während des Siegelvorgangs selbst. Zu diesem Zweck ist zunächst die Siegelkammer 13 geschlossen worden, indem das Siegelwerkzeugunterteil 8 angehoben und von unten gegen den Rand 11 der Verpackungsmulde 2 angelegt worden. Gleichzeitig ist das Siegelwerkzeugoberteil 9 abgesenkt worden, um den Rand 11 der Verpackungen sowie die Deckelfolie 5 zwischen sich und dem Siegelwerkzeugunterteil 8 einzuklemmen.

Im nächsten Schritt ist - wie durch den Pfeil P angedeutet - das Siegelwerkzeuginnenteil 14 abgesenkt worden, indem der Raum 19 oberhalb der Siegelplatte 14 mit Druckluft gefüllt wurde. Auf diese Weise wird der erwärmte Siegelrand 15 an die Verpackungen angelegt und gleichzeitig der erforderliche Siegeldruck aufgebaut, um die Oberfolie 5 mit der Unterfolie 2 zu versiegeln.

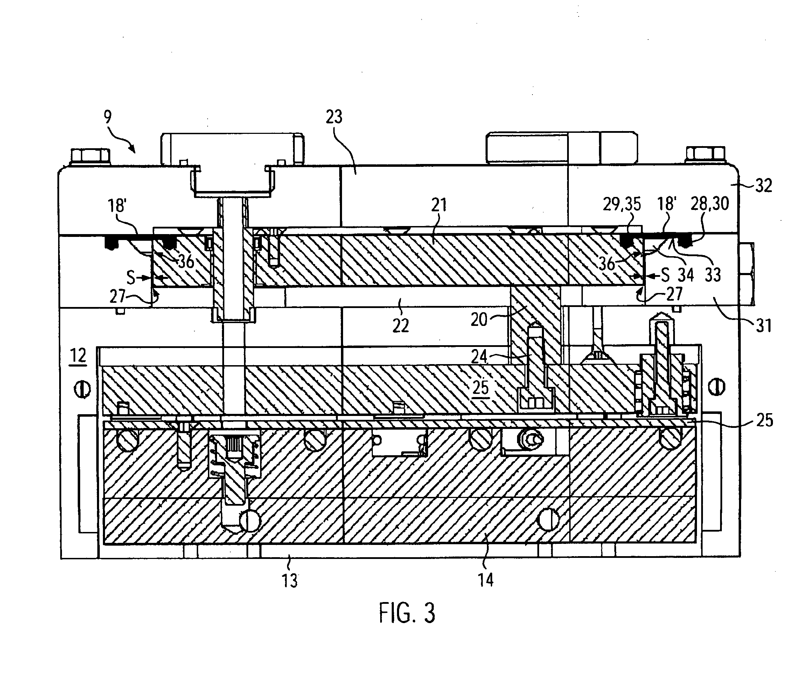

Figur 3 zeigt in Vergrößerung das zweite Ausführungsbeispiel des Siegelwerkzeugoberteils 9, bei dem die Siegelplatte 14 über Bolzen 20 starr mit einer Kolbenplatte 21 verbunden ist. Diese Bolzen 20 sind über Schrauben 24 an einer mehrteiligen, beheizbaren Heizplatte 25 angeschraubt, die ihrerseits fest mit der Siegelplatte 14 verbunden ist. Ein flächiger Kontakt zwischen der Heizplatte 25 und der Siegelplatte 14 gewährleistet eine hohe Wärmeleitung von der Heizplatte 25 zur Siegelplatte 14.

Die Kolbenplatte 21 befindet sich in einer Kolbenkammer 22 oberhalb der Siegelkammer 13. Zwischen den Seiten der Kolbenplatte 21 und den Wänden 23 der Kolbenkammer 22 besteht ein Spalt 27 mit einer minimalen, gerade die Bewegung der Kolbenplatte 21 zulassenden Breite S. Oberhalb des Spaltes 27 verbindet die flächige, ringförmige Dichtung 18' die Kolbenplatte 21 (als Siegelwerkzeuginnenteil) und die Wand 23 der Kolbenkammer 22 (als Siegelwerkzeugaußenteil).

Die Dichtung 18' verfügt über einen Außenwulst 28 und einen Innenwulst 29, die jeweils dicker sind als der mittlere Bereich der Dichtung 18'. Der Außenwulst 28 der Dichtung 18' ist aufgenommen in einem ersten Haltebereich 30 in der Wand 23 der Kolbenkammer 22. Dieser erste Haltebereich 30 ist als eine nach oben geöffnete Nut in einem unteren Stück 31 der Wand 23 ausgebildet, die nach dem Einlegen der Dichtung 18' durch eine obere Abdeckplatte 32 abgeschlossen wird, um den Außenwulst 28 der Dichtung 18' zu befestigen. Zwischen einer abgerundeten Kante 33 des unteren Wandstücks 31 und der Abdeckplatte 32 verbleibt gerade genug Platz zur Aufnahme des mittleren Abschnitts der Dichtung 18'. Zwischen dieser abgerundeten Kante 33 und der nach innen weisenden Kontur des unteren Wandstücks 31 ist eine Abschrägung oder Abstufung 34 vorgesehen, die in der Stellung gemäß Figur 3 vom mittleren Abschnitt der Dichtung 18' überspannt wird.

Der Innenwulst 29 der Dichtung 18' ist in einem zweiten Haltebereich 35 befestigt, der als Nut in der Oberseite der Kolbenplatte 21 ausgebildet ist. Insbesondere ist der zweite Haltebereich 35 an oder (im dargestellten Ausführungsbeispiel) nahe der Außenkante bzw. der Außenkontur 36 des Sigelwerkzeuginnenteils 14, 21 angeordnet. "Nahe der Außenkante" bedeutet in diesem Zusammenhang, dass die Mitte des zweiten Haltebereichs 35 nicht weiter von der Außenkante 36 entfernt ist als beispielsweise zwei bis vier mal die Dicke des Innenwulstes 29, oder als fünf bis zehn mal die Dicke des mittleren Bereichs der Dichtung 18'.

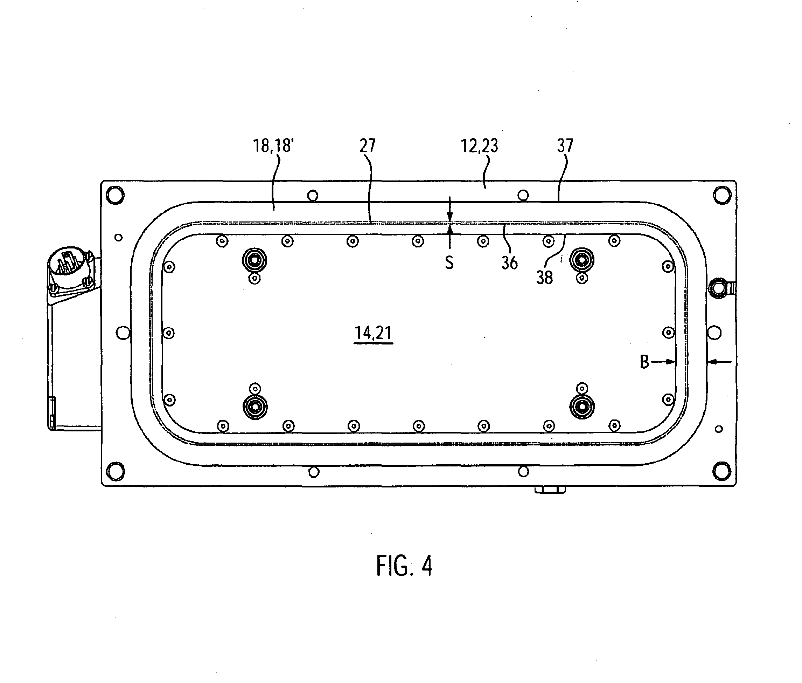

Figur 4 zeigt eine Draufsicht auf das in Figur 3 gezeigte Siegelwerkzeugoberteil 9 nach Abnahme der Abdeckplatte 32. In der Mitte ist das etwa rechteckige, aber mit abgerundeten Ecken versehene Siegelwerkzeuginnenteil 14, 21 zu sehen (d. h. die Siegelplatte bzw. die Kolbenplatte). Durch den Spalt 27 mit konstanter Breite S ist das Siegelwerkzeuginnenteil 14, 21 getrennt vom Siegelwerkzeugaußenteil 12, 23 (d. h. der Außenwand der Siegelkammer 13 bzw. der Kolbenkammer 22).

Überbrückt wird der Spalt 27 durch die Dichtung 18, 18', deren ringförmiger Verlauf hier besonders gut zu erkennen ist. Darüber hinaus wird ersichtlich, dass sowohl die Außenkante 37, als auch die Innenkante 38 der ringförmigen Dichtung 18, 18' in Draufsicht kongruent sind zum Verlauf des Spalts 27, bzw. zur Außenkante oder Außenkontur 36 des Siegelwerkzeuginnenteils 14, 21. Die Breite B der Dichtung 18, 18' ist deutlich größer als die Breite S des Spalts 27.

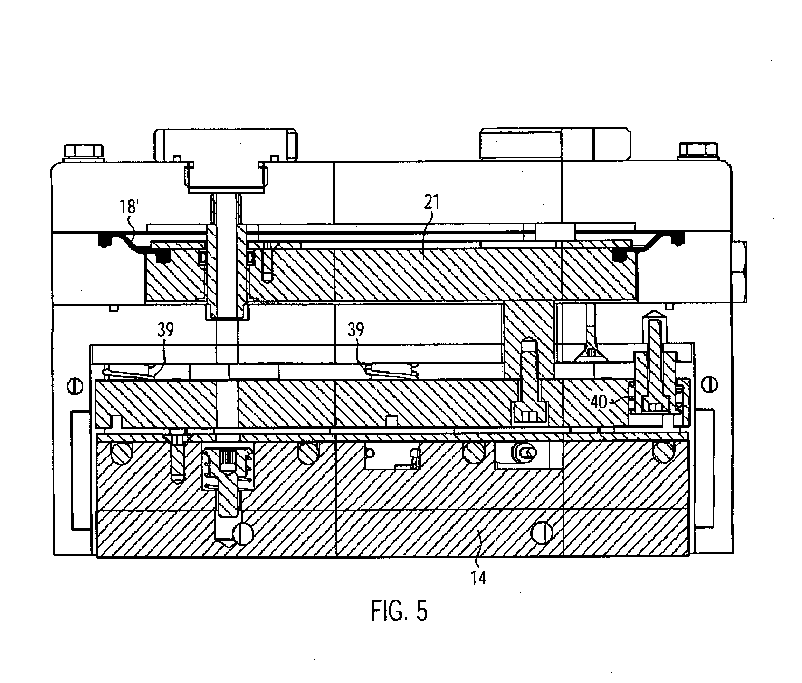

Figur 5 zeigt das in Figur 3 dargestellte Siegelwerkzeugoberteil 9, nun jedoch in einer abgesenkten Position der Kolbenplatte 21 und der Siegelplatte 14. Dieses Absenken wird durchgeführt, indem über nicht dargestellte Kanäle Druckluft in den Raum der Kolbenkammer 22 oberhalb der Kolbenplatte 21 eingeleitet wird, und indem in der Siegelkammer 13 ein Unterdruck erzeugt wird. Die Druckdifferenz zwischen dem Unterdruck in der Siegelkammer 13 und dem Überdruck in der Kobenkammer 22 kann beispielsweise 1 oder 2 bar betragen. Diese Druckdifferenz führt dazu, dass sich die Kolbenplatte 21 gemeinsam mit der Siegelplatte 14 nach unten bewegt.

Die Dichtung 18' wird dabei gedehnt. Durch den oberhalb von ihr herrschenden Unterdruck legt sie sich an die Oberfläche der Abschrägung oder Abstufung 34 an. Diese Oberfläche hat einen gestreckten, S-förmigen Verlauf. Dieser Verlauf sorgt dafür, dass in der in Figur 5 gezeigten, abgesenkten Stellung der Kobenplatte 21 die Oberseite der Kolbenplatte 21 zusammen mit der Oberfläche der Abschrägung 34 einen stetigen, stufenlosen Verlauf bildet. Die Dichtung 18' kann sich an diese Oberflächen anlegen, ohne an dem Spalt 27 eine Kante oder einen Knick zu erhalten. Auf diese Weise wird die Dehnung der Dichtung 18' gleichmäßig über Ihren gesamten mittleren Bereich zwischen den beiden Haltebereichen 30, 35 verteilt, sodass lokale, übermäßige Beanspruchungen vermieden werden.

Über Zugfedern 39 und/oder Druckfedern 40 ist das Siegelwerkzeuginnenteil 14 am Siegelwerkzeugaußenteil 12 aufgehängt. Sobald die Druckdifferenz zwischen der Siegelkammer 13 und der Kolbenkammer 22 abgebaut wird, beispielsweise durch Entlüften der Siegelkammer 13 und der Kolbenkammer 22, bringen die Federn 39, 40 die Siegelplatte 14 und (sofern vorhanden) die Kolbenplatte 21 wieder in die angehobene Ausgangsposition zurück.

Ausgehend von den dargestellten Ausführungsbeispielen kann das erfindungsgemäße Siegelwerkzeug 1 auf vielfache Weise abgewandelt werden. Beispielsweise ist es möglich, die Kolbenplatte 21 nicht in einer separaten Kolbenkammer 22, sondern im oberen Bereich der Siegelkammer 13 selbst unterzubringen. Die relativen Abmessungen der Dichtung 18, 18', insbesondere das Verhältnis der Stärke der beiden Wulste 28, 29 zum mittleren Bereich, kann sich vom dargestellten Ausführungsbeispiel unterscheiden.

## Patentansprüche

1. Siegelwerkzeug (1) für eine Verpackungsmaschine, wobei das Siegelwerkzeug (1) ein Siegelwerkzeugaußenteil (12, 23) aufweist, in dem ein Siegelwerkzeuginnenteil (14, 21) beweglich ist, und wobei eine Dichtung (18, 18') zwischen dem Siegelwerkzeugaußenteil (12, 23) und dem Siegelwerkzeuginnenteil (14, 21) vorgesehen ist,
wobei die Dichtung (18, 18') flächig und ringförmig ausgebildet und sowohl in einem ersten Haltebereich (30) am Siegelwerkzeugaußenteil (12, 23), als auch in einem zweiten Haltebereich (35) am Siegelwerkzeuginnenteil (14, 21) befestigt ist, wobei der zweite Haltebereich (35) am Siegelwerkzeuginnenteil (14, 21) an oder nahe der Außenkante (36) des Siegelwerkzeuginnenteils (14, 21) angeordnet ist,
wobei zwischen dem Siegelwerkzeugaußenteil (12, 23) und dem Siegelwerkzeuginnenteil (14, 21) ein Spalt (27) mit einer Spaltbreite (S) vorliegt, **dadurch gekennzeichnet, dass** der erste und der zweite Haltebereich (30, 35) in einer Projektion auf eine Ebene senkrecht zur Bewegungsrichtung (P) des Siegelwerkzeuginnenteils (14, 21) weiter voneinander entfernt sind als die Spaltbreite (S), und
dass zwischen zumindest einem der beiden Haltebereiche (30, 35) und dem Spalt (27) eine Abschrägung oder Abstufung (34) vorgesehen ist.

2. Siegelwerkzeug nach Anspruch 1, **dadurch gekennzeichnet, dass** die Dichtung (18, 18') eine zum Verlauf der Außenkontur (36) des Siegelwerkzeuginnenteils (14, 21) kongruente Form aufweist.

3. Siegelwerkzeug nach einem der vorangehenden Ansprüche, **dadurch gekennzeichnet, dass** die Dichtung (18, 18') ausgehend von einem entspannten Zustand dehnbar ist.

4. Siegelwerkzeug nach einem der vorangehenden Anspruche, **dadurch gekennzeichnet, dass** die Dichtung (18, 18') Silikon aufweist oder aus Silikon besteht.

5. Siegelwerkzeug nach einem der vorangehenden Ansprüche, **dadurch gekennzeichnet, dass** die Dichtung (18, 18') eine konstante Breite (B) aufweist.

6. Siegelwerkzeug nach einem der vorangehenden Ansprüche, **dadurch gekennzeichnet, dass** der erste Haltebereich (30) gegenüber der Außenkante des Spalts (27) nach Außen versetzt ist.

7. Siegetwerkzeug nach einem der vorangehenden Ansprüche, **dadurch gekennzeichnet, dass** der zweite Haltebereich (35) gegenüber der Innenkante des Spalts (27) auf dem Siegelwerkzeuginnenteil (14, 21) nach Innen versetzt ist.

8. Siegelwerkzeug nach Anspruch 7, **dadurch gekennzeichnet, dass** sich in einer Endstellung des Siegelwerkzeuginnenteils (14, 21) eine Oberfläche des Siegelwerkzeuginnenteils (14, 21) jenseits des Spalts (27) stetig fortsetzt mit der Oberfläche () der Abschrägung oder Abstufung (34).

9. Siegelwerkzeug nach Anspruch 7, **dadurch gekennzeichnet, dass** die Dichtung (18, 18') in jeder Stellung während der Bewegung des Siegelwerkzeuginnenteils (14, 21) von der Abschrägung oder Abstufung (34) beabstandet bleibt.

10. Siegelwerkzeug nach einem der vorangehenden Ansprüche, **dadurch gekennzeichnet, dass** zwischen zumindest einem der beiden Haltebereiche (30, 35) und dem Spalt (27) eine Kante (33) mit einer Abrundung vorgesehen ist.

11. Verpackungsmaschine mit einem Siegelwerkzeug (1) nach einem der vorangehenden Ansprüche.

## Claims

1. Sealing tool (1) for a packaging machine, wherein the sealing tool (1) comprises a sealing tool outer part (12, 23) in which a sealing tool inner part (14, 21) is movable, and wherein a seal (18, 18') is provided between the sealing tool outer part (12, 23) and the sealing tool inner part (14, 21), wherein the seal (18, 18') has a flat and annular shape and is fixed in a first holding region (30) at the sealing tool outer part (12, 23) as well as in a second holding region (35) at the sealing tool inner part (14, 21), the second holding region (35) being disposed at the sealing tool inner part (14, 21) at or in the proximity of the outer edge (36) of the sealing tool inner part (14, 21),
wherein a gap (27) with a gap width (S) is provided between the sealing tool outer part (12, 23) and the sealing tool inner part (14, 21),
**characterized in that**
the first and the second holding region (30, 35) are further apart than the gap width (S) in a projection on a plane perpendicular to the direction of motion (P) of the sealing tool inner part (14, 21), and
that a bevel or stepping (34) is provided between at least one of the two holding regions (30, 35) and the gap (27).

2. Sealing tool according to claim 1, **characterized in that** the seal (18, 18') comprises a shape congruent to the run of the outer contour (36) of the sealing tool inner part (14, 21).

3. Sealing tool according to one of the preceding claims, **characterized in that** the seal (18, 18') is expandable starting form an unstressed condition.

4. Sealing tool according to one of the preceding claims, **characterized in that** the seal (18, 18') comprises silicone or consists of silicone.

5. Sealing tool according to one of the preceding claims, **characterized in that** the seal (18, 18') comprises a constant width (B).

6. Sealing tool according to one of the preceding claims, **characterized in that** the first holding region (30) is offset to the outside with respect to the outer edge of the gap (27).

7. Sealing tool according to one of the preceding claims, **characterized in that** the second holding region (35) is offset to the inside with respect to the inner edge of the gap (27) on the sealing tool inner part (14, 21).

8. Sealing tool according to claim 7, **characterized in that** in an end position of the sealing tool inner part (14, 21), a surface of the sealing tool inner part (14, 21) extends continuously with the surface of the bevel or stepping (34) at the other side of the gap (27).

9. Sealing tool according to claim 7, **characterized in that** the seal (18, 18') remains spaced apart from the bevel or stepping (34) in each position during the movement of the sealing tool inner part (14, 21).

10. Sealing tool according to one of the preceding claims, **characterized in that** an edge (33) with a rounding is provided between at least one of the two holding regions (30, 35) and the gap (27).

11. Packaging machine with a sealing tool (1) according to one of the preceding claims.

## Revendications

1. Outil de scellage (1) pour une machine d'emballage, l'outil de scellage (1) présentant une partie extérieure d'outil de scellage (12, 23) dans laquelle est mobile une partie intérieure d'outil de scellage (14, 21), et un joint d'étanchéité (18, 18') étant prévu entre la partie extérieure d'outil de scellage (12, 23) et la partie intérieure d'outil de scellage (14, 21), outil de scellage
dans lequel le joint d'étanchéité (18, 18') est d'une configuration plate et de forme annulaire, et est fixé aussi bien dans une première zone de retenue (30) sur la partie extérieure d'outil de scellage (12, 23), que dans une deuxième zone de retenue (35) sur la partie intérieure d'outil de scellage (14, 21),
dans lequel la deuxième zone de retenue (35) sur la partie intérieure d'outil de scellage (14, 21) est disposée sur ou à proximité du bord extérieur (36) de la partie intérieure d'outil de scellage (14, 21), et
dans lequel entre la partie extérieure d'outil de scellage (12, 23) et la partie intérieure d'outil de scellage (14, 21) existe un interstice (27) d'une largeur d'interstice (S),
**caractérisé en ce que** la première zone de retenue et la deuxième zone de retenue (30, 35) sont, dans une projection sur un plan perpendiculaire à la direction de mouvement (P) de la partie intérieure d'outil de scellage (14, 21), plus éloignées l'une de l'autre que la largeur d'interstice (S), et
**en ce qu'**entre au moins l'une des deux zones de retenue (30, 35) et l'interstice (27), est prévu un chanfrein ou un gradin d'étagement (34).

2. Outil de scellage selon la revendication 1, **caractérisé en ce que** le joint d'étanchéité (18, 18') présente une forme congruente au tracé du contour extérieur (36) de la partie intérieure d'outil de scellage (14, 21).

3. Outil de scellage selon l'une des revendications précédentes, **caractérisé en ce que** le joint d'étanchéité (18, 18') peut s'allonger à partir d'un état détendu.

4. Outil de scellage selon l'une des revendications précédentes, **caractérisé en ce que** le joint d'étanchéité (18, 18') renferme du silicone ou est constitué de silicone.

5. Outil de scellage selon l'une des revendications précédentes, **caractérisé en ce que** le joint d'étanchéité (18, 18') présente une largeur (B) constante.

6. Outil de scellage selon l'une des revendications précédentes, **caractérisé en ce que** la première zone de retenue (30) est décalée vers l'extérieur par rapport au bord extérieur de l'interstice (27).

7. Outil de scellage selon l'une des revendications précédentes, **caractérisé en ce que** la deuxième zone de retenue (35) est décalée, sur la partie intérieure d'outil de scellage (14, 21), vers l'intérieur par rapport au bord intérieur de l'interstice (27).

8. Outil de scellage selon la revendication 7, **caractérisé en ce que** dans une position terminale de la partie intérieure d'outil de scellage (14, 21), une surface de la partie intérieure d'outil de scellage (14, 21) se poursuit de manière continue au delà de l'interstice (27), par la surface du chanfrein ou du gradin d'étagement (34).

9. Outil de scellage selon la revendication 7, **caractérisé en ce que** dans chaque position, pendant le mouvement de la partie intérieure d'outil de scellage (14, 21), le joint d'étanchéité (18, 18') reste espacé du chanfrein ou du gradin d'étagement (34).

10. Outil de scellage selon l'une des revendications précédentes, **caractérisé en ce qu'**entre au moins l'une des deux zones de retenue (30, 35) et l'interstice (27), est prévu un bord (33) avec un arrondi.

11. Machine d'emballage comprenant un outil de scellage (1) selon l'une des revendications précédentes.
